# FASCICULE DE BREVET EUROPEEN

(11) **EP 0 932 245 B1**
(45) Date de publication et mention de la délivrance du brevet: **20.09.2006**
(21) Numéro de dépôt: 99400163.4
(22) Date de dépôt: 25.01.1999
(51) Int. Cl.: H02K 21/04, H02K 1/27, H02K 16/02

(54) **Machine électrique à double excitation, et notamment alternateur de véhicule automobile**
Elektrische Maschine mit doppelter Erregung, und insbesondere Fahrzeuggenerator
Electric machine with double excitation, and in particular vehicle alternator

(30) Priorité: 26.01.1998 FR 9800780
(43) Date de publication de la demande: 28.07.1999
(73) Titulaire: VALEO EQUIPEMENTS ELECTRIQUES MOTEUR, 94000 Créteil (FR)
(72) Inventeur: Akemakou, Dokou Antoine, 94400 Vitry sur Seine (FR)
(74) Mandataire: Le Forestier, Eric

(56) Documents cités:
- EP-A- 0 394 528
- WO-A-96/30992
- DE-C- 4 139 843
- SU-A- 1 173 495
- PATENT ABSTRACTS OF JAPAN vol. 018, no. 109 (E-1513), 22 février 1994 (1994-02-22) & JP 05 304752 A (FUJI ELECTRIC CO LTD), 16 novembre 1993 (1993-11-16)

## Description

La présente invention a trait d'une façon générale aux machines tournantes telles que les alternateurs pour véhicules automobiles.

La génératrice mono- ou polyphasée que constitue un alternateur classique de véhicule automobile comporte généralement un stator à l'intérieur duquel tourne un rotor pourvu d'un bobinage d'excitation. Ce bobinage est alimenté par des balais en contact avec deux bagues collectrices prévues sur une partie en saillie de l'arbre du rotor.

On connaît déjà notamment par EP-A-0 707 374 des machines tournantes dans lesquelles, en vue notamment d'accroître leur rendement, le champ d'excitation du rotor est réalisé à la fois par des aimants permanents et par des bobines (on parle en général d'excitation « mixte »), et dans lesquelles on contrôle le courant délivré par l'induit à l'aide de moyens de commutation au niveau des bobinages d'excitation, ces moyens de commutation permettant d'inverser sélectivement le sens de l'excitation pour diminuer, voire sensiblement annuler, le flux des aimants.

Cette nécessité d'inverser le sens du courant d'excitation impose d'utiliser un pont de commutation à semi-conducteurs dit en « H », dont le coût est élevé et qui grève donc le prix de revient de la machine.

On connaît également par le document WO-A-96 30992 une machine tournante selon le préambule de la revendication 1. Toutefois, cette machine connue ne permet pas de réguler le courant délivré en jouant sur une excitation par les bobines s'effectuant de façon unidirectionnelle et en particulier en faisant varier l'excitation par les bobines entre une valeur essentiellement nulle et une valeur maximale pour délivrer respectivement une énergie essentiellement nulle et une énergie maximale.

La présente invention vise à pallier ces limitations.

Un autre objet de l'invention, dans une telle machine, est de pouvoir, pour un nombre donné de pôles de rotor, diminuer le nombre d'aimants nécessaires tout en conservant un niveau d'excitation par aimants et un niveau d'excitation par bobines qui soient équilibrés l'un par rapport à l'autre.

Ainsi l'invention propose une machine électrique telle que définie dans la revendication 1.

Des aspects préférés, mais non limitatifs, de cette machine selon l'invention sont définis dans les revendications dépendantes.

L'invention propose en outre une machine telle que définie ci-dessus, qui constitue un alternateur de véhicule automobile.

D'autres aspects, buts et avantages de la présente invention apparaîtront mieux à la lecture de la description détaillée suivante de formes de réalisation préférées de celle-ci, donnée à titre d'exemple et faite en référence aux dessins annexés, sur lesquels :
la figure 1a est une vue schématique sous forme développée d'un ensemble de rotor et de stator d'une machine tournante selon une première forme de réalisation de l'invention, dans un état de non-excitation des bobinages inducteurs,
la figure 1b est une vue semblable à la figure 1, dans un état d'excitation des bobinages inducteurs,
la figure 2 est une vue schématique en coupe transversale d'un ensemble de rotor et de stator d'une machine polyphasée selon l'invention,
la figure 3 est une vue schématique sous forme développée d'un ensemble de rotor et de stator d'une machine tournante selon une seconde forme de réalisation de l'invention,
la figure 4 est une vue schématique en coupe transversale d'une forme de réalisation possible de la carcasse du rotor de la figure 2, et
la figure 5 est une vue schématique en coupe transversale d'une forme de réalisation possible de la carcasse du rotor de la figure 3.

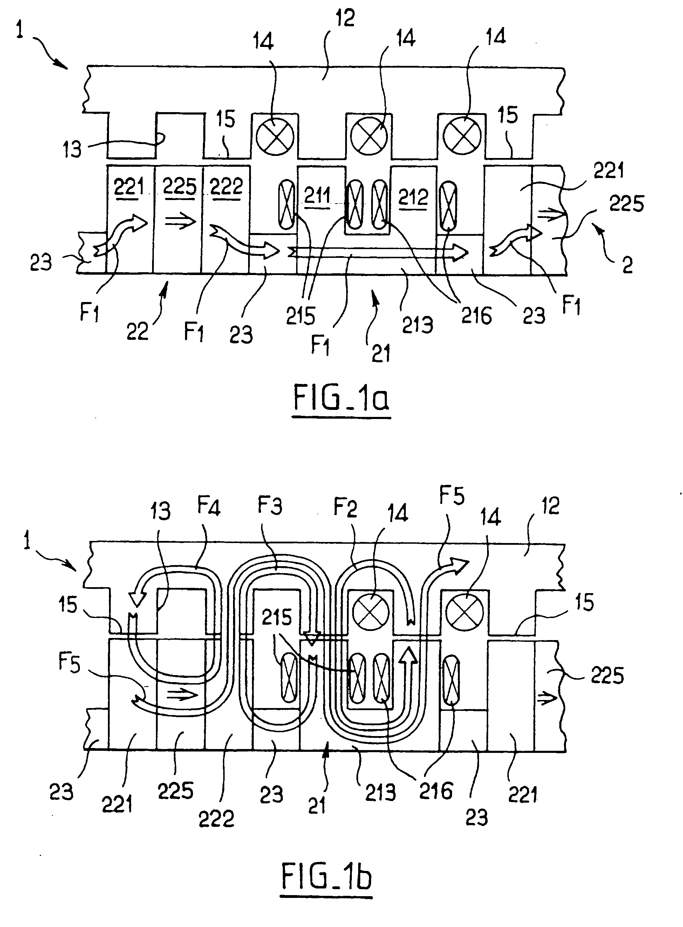

En référence tout d'abord aux figures 1a et 1b, on a représenté schématiquement sous forme développée une partie d'un stator 1 et de la partie homologue d'un rotor 2 pouvant équiper une machine électrique, mono- ou polyphasée selon l'invention, telle qu'un alternateur.

Le stator 1 possède une carcasse 12 définissant une structure annulaire continue à la périphérie intérieure de laquelle est ménagée une pluralité d'encoches 13 qui reçoivent des brins de bobinages d'induit 14, de façon entièrement classique en soi.

Ces encoches 13 sont en nombre pair et sont régulièrement réparties angulairement, en laissant entre elles des pôles 15.

Le rotor 2 est défini par une succession de structures, séparées ou de préférence réalisées d'un seul tenant en matériau ferromagnétique. Ces structures, individualisées sur les figures 1a et 1b pour faciliter les explications, comprennent une première structure 21, en « U », avec deux branches 211, 212 dont les extrémités libres définissent deux pôles saillants extérieurs, dont le pas angulaire est égal à celui des pôles 15 du stator dans le cas d'une machine monophasée, et une base 213.

Autour de chacune des deux branches 211, 212 est enroulé un bobinage d'excitation, respectivement 215, 216, ces bobinages étant raccordées entre eux de manière à engendrer deux flux magnétiques de sens inverse, comme on le verra en détail plus loin.

On prévoit de préférence plusieurs des structures en « U » précitées, régulièrement espacées angulairement.

Entre ces structures en « U » 21 sont intercalées des structures à aimant permanent 22, en nombre identique, qui comprennent chacune un aimant permanent 225 emprisonné entre deux pièces ferromagnétiques 221, 222 dont les faces tournées vers le stator constituent des pôles, les pôles des structures en « U » 211 et ceux des pièces 221, 222 étant régulièrement espacés à la périphérie extérieure du rotor. Dans le cas d'une machine triphasée, le nombre d'encoches 13 du stator est égal à trois fois le nombre de pôles du rotor tels que définis ci-dessus.

Les structures 21 et 22 sont raccordées entre elles par des pièces intercalaires 23 en matériau ferromagnétique, formant raccords magnétiques, ces pièces occupant une dimension radiale du stator (qui correspond à la hauteur sur les figures 1a et 1b) sensiblement inférieure à la dimension radiale des structures 21 et 22.

De préférence, et comme illustré, ces pièces de raccord 23 s'étendent essentiellement à la hauteur des bases 213 des pièces en « U » 21, en laissant au-dessus d'elles l'espace nécessaire aux brins extérieurs des deux bobinages d'excitation 215, 216.

Bien entendu, on comprend à partir des explications ci-dessus que les différents éléments du rotor peuvent être prévus en N exemplaires disposés en groupes successifs, selon le nombre de pôles souhaité.

On va maintenant décrire en référence aux figures 1a et 1b le comportement d'une machine tournante, en l'espèce un alternateur, dont le principe a été décrit ci-dessus.

On considère tout d'abord le cas où aucun courant d'excitation ne traverse les bobinages d'excitation 215, 216 (figure 1a).

Dans ce cas, le flux magnétique engendré par les aimants permanents 225 peut suivre un circuit fermé lui-même, qui passe par les pièces 221, 222, par les raccords magnétiques 23 et par la partie de base 213 des pièces en « U » 21.

Il en résulte que ce flux, illustré par les flèches F1 sur la figure 1a, ne se transmet pas au stator, sauf peut-être de façon négligeable sous forme d'un flux de fuite. L'alternateur est donc dans une situation de non-excitation, et les bobinages du stator ne vont délivrer sensiblement aucun courant.

Lorsqu'un courant est appliqué aux bobinages d'excitation 215, 216, dans un sens tel qu'un flux magnétique dirigé vers le bas soit engendré dans le bobinage 215 situé en amont par rapport au sens du flux F1, et qu'un flux magnétique dirigé vers le haut soit engendré dans le bobinage 216 situé en aval, alors on assiste à la circulation entre le rotor et le stator de trois flux principaux :
- un premier flux, désigné par la flèche F2, circule dans les branches 211, 212 et la base 213 de la pièce en « U » 21 et entre deux pôles adjacents du stator, dans le sens inverse de celui des aiguilles d'une montre sur la figure 1b ;
- un deuxième flux désigné par la flèche F3 circule dans le sens des aiguilles d'une montre via la branche de gauche 211 de la pièce 21, la pièce 23 formant raccord magnétique, et la pièce 222 adjacente à l'aimant 225, ainsi que via le stator entre deux pôles adjacents de celui-ci ;
- le flux magnétique produit par l'aimant permanent 225 rencontrant au niveau du raccord magnétique 23 un flux de sens contraire (flux F3), ce flux d'aimant va circuler au moins en partie, comme on va le voir en détail plus loin, à travers les deux pièces 222, 221 adjacentes à l'aimant et via deux pôles adjacents du stator (flux F4, orienté dans le sens inverse de celui des aiguilles d'une montre) ;
- enfin un flux magnétique complémentaire, dit flux homopolaire et désigné par F5, est produit par l'aimant 225 et par les bobinages d'excitation 215, 216.

Ainsi on crée au niveau du rotor 2 une succession de pôles nord et sud qui vont permettre aux bobinages du stator de délivrer un courant.

Il est important d'observer ici que l'amplitude du courant de rotor au niveau des bobinages de rotor 215, 216 détermine directement un niveau général d'excitation de la machine, qui varie de façon monotone en fonction dudit courant.

Plus précisément, lorsque le courant de rotor est nul (cas de la figure la), alors comme on l'a vu plus haut l'excitation est nulle.

Lorsqu'en revanche le courant dans les bobinages 215, 216 est tel que le flux s'étendant vers la gauche dans les raccords magnétiques 23 est égal en valeur absolue à celui qui serait créé par l'aimant permanent adjacent en l'absence de courant de rotor, alors la totalité du flux engendré par ledit aimant est détourné vers le stator. L'excitation de la machine est alors maximale, et les moyens prévus dans l'alternateur pour engendrer le courant de rotor variable sont tels que la valeur de courant correspondant à cette dernière situation est une valeur maximale du courant.

De la sorte, on réalise une machine dans laquelle, en utilisant un courant d'excitation unidirectionnel variant entre zéro et une valeur maximale prédéfinie, on obtient une excitation variant, de façon monotone en fonction du courant, entre une excitation nulle et une excitation maximale.

Il est ainsi possible d'éviter le recours à un pont de commutation électronique en « H » ou analogue destiné, dans les machines à excitation mixte de l'art antérieur, à obtenir un courant bidirectionnel en fonction de l'excitation recherchée. Le coût des moyens de commutation, qui peuvent comprendre un élément de commutation à semi-conducteur unique, est ainsi sensiblement réduit.

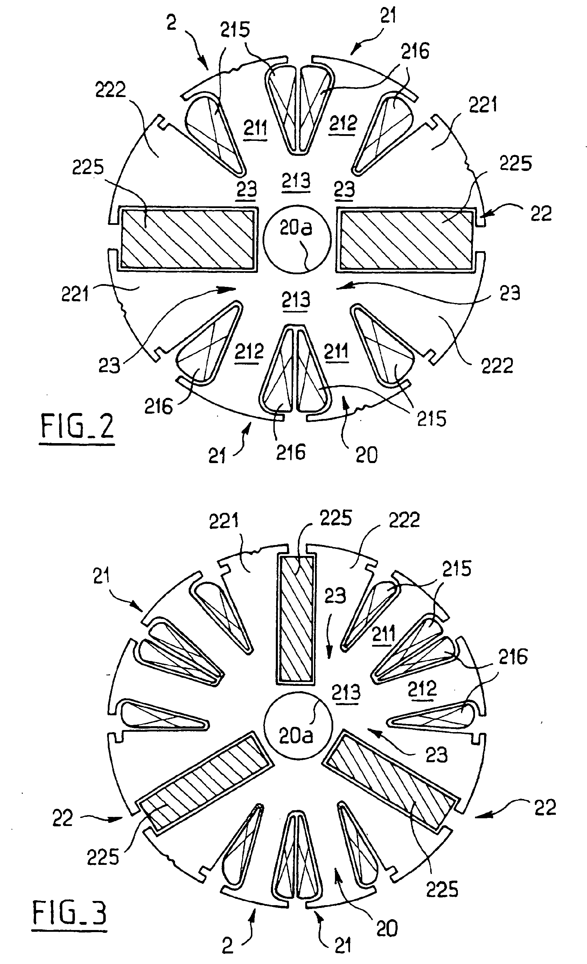

On va maintenant décrire en référence aux figures 2 et 3 des exemples de réalisation concrète du rotor d'une machine selon l'invention.

On observera ici que, dans les deux cas, l'ensemble des pièces ferromagnétiques décrites en référence aux figures 1a et 1b sont réunies en une carcasse unique, désignée par la référence 20 sur ces figures.

La figure 2 montre le cas d'un rotor à huit pôles, avec deux aimants permanents 225 diamétralement opposés, et deux paires de bobinages d'excitation 215, 216.

Les éléments ferromagnétiques correspondant à ceux des figures 1a et 1b sont désignés par les mêmes signes de référence. On observe essentiellement que la partie de la carcasse 20 entourant un alésage central 20a de celle-ci, destiné à recevoir l'arbre de rotor, définit à la fois les bases 213 des éléments en « U » 21 et les raccords magnétiques 23, qui présentent une dimension radiale réduite entre ledit alésage et le fond des encoches qui reçoivent les brins extérieurs des bobinages 215, 216.

Dans le cas où le rotor de la figure 2 est destiné à un alternateur triphasé, alors on prévoit un stator à 24 encoches, de préférence régulièrement réparties, dans lesquelles sont agencés les bobinages triphasés de stator.

La figure 3 illustre le cas d'un rotor à 12 pôles, avec trois aimants 225 équidistants de 120° et trois paires de bobinages d'excitation 215, 216. On prévoit dans ce cas, pour une machine triphasée, un stator à 36 encoches de préférence régulièrement réparties.

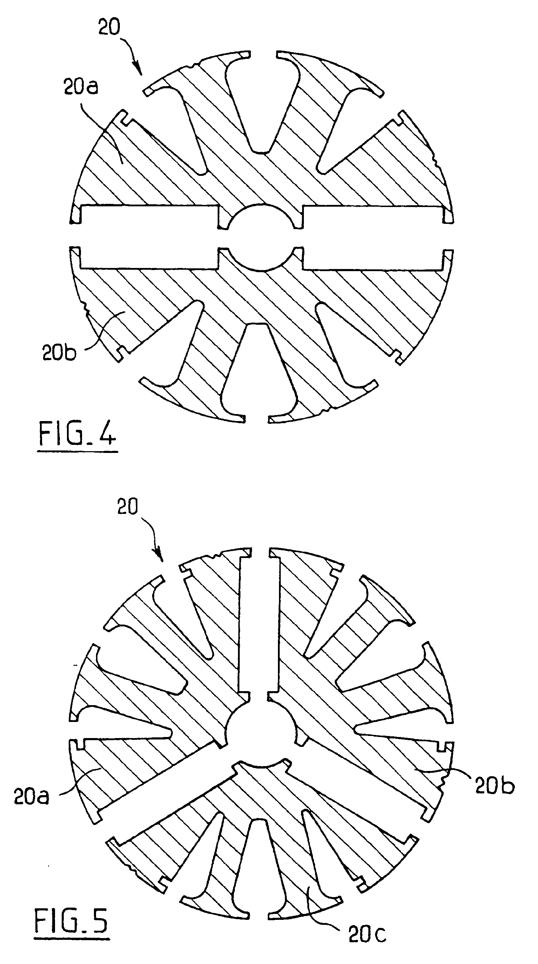

On va maintenant décrire en référence aux figures 4 et 5 des variantes de réalisation des carcasses des rotors illustrés sur les figures 2 et 3.

Comme on l'observe sur la figure 4, la carcasse 20 du rotor est réalisé en deux secteurs 20a, 20b destinés à s'étendre entre les deux aimants 225, et réunies à ces derniers lors de l'assemblage de manière à former une structure cylindrique continue.

Sur la figure 5, on observe que ce sont trois secteurs 20a, 20b et 20c qui sont prévus, réunis ici encore aux trois aimants pour former le rotor.

Cette séparation du rotor en N secteurs (N variant selon le nombre de pôles recherché) est avantageuse en ce qu'elle va permettre de faciliter la réalisation des bobinages, les différents secteurs étant plus faciles à bobiner séparément qu'une carcasse cylindrique unique.

On observera ici par ailleurs un autre avantage de la présente invention : du fait que le flux magnétique des aimants est refermé sur lui-même en l'absence de courant d'excitation, il n'existe aucun risque que, lors de l'assemblage de la machine, le rotor ne se plaque contre des pièces ferromagnétiques susceptibles de se trouver sur la ligne d'assemblage de la machine.

Bien entendu, la présente invention n'est nullement limitée aux formes de réalisation décrites et représentées, mais l'homme du métier saura y apporter toute variante ou modification conforme à son esprit.

En particulier, on peut prévoir dans le rotor toute combinaison de structures à aimant et de structures à bobinages, et par exemple deux structures à bobinages ou davantage entre chaque paire de structures à aimant, ou au contraire deux structures à aimant ou davantage entre chaque paire de structures à bobinages.

Dans ce cas, les bobinages et les aimants sont conçus de manière à ce que le flux maximal des bobinages soit à même de faire obstacle à l'essentiel du flux circonférentiel engendré par les aimants en l'absence de courant d'excitation.

On peut prévoir également que chaque structure à bobinage ne comporte qu'un seul bobinage judicieusement disposé.

On peut enfin prévoir que chaque structure à aimant possède deux aimants ou davantage, dont les flux se combinent pour obtenir l'effet recherché d'un flux circonférentiel dans le rotor en l'absence d'excitation au niveau des bobinages.

## Revendications

1. Machine électrique à commutation de flux, comportant un stator (1) et un rotor (2), le stator comportant au moins un bobinage d'induit (14) logé dans au moins une paire d'encoches (13), le rotor comportant des moyens aptes à sélectivement établir des circuits magnétiques fermés passant autour des brins du ou des bobinages d'induit, ces moyens comportant au moins un aimant permanent d'excitation (225) apte à établir un flux magnétique dans une direction circonférentielle du rotor, et au moins un bobinage d'excitation (215, 216) apte à établir localement un flux magnétique réglable dans une direction circonférentielle inverse de celle du flux produit par le ou chaque aimant, le ou chaque aimant étant logé dans une première partie de rotor (22) définissant une première paire de pôles du rotor, le ou chaque bobinage étant placé autour d'une seconde partie du rotor (21) dont des extrémités définissent une seconde paire de pôles du rotor, machine **caractérisée en ce que** le rotor possède entre les première et seconde parties de rotor adjacentes des troisièmes parties de rotor (23) formant avec lesdites premières et secondes parties un trajet de conduction magnétique apte à être emprunté par le flux magnétique établi par le ou chaque aimant en se bouclant sur lui-même à l'intérieur du rotor.

2. Machine électrique selon la revendication 1, **caractérisée en ce que** la ou chaque seconde partie (21) de rotor possède deux bobinages d'excitation (215, 216) aptes à créer des flux magnétiques dirigés l'un vers l'intérieur, l'autre vers l'extérieur du rotor (2).

3. Machine électrique selon la revendication 1 ou 2, **caractérisée en ce que** le rotor (2) comporte le long de sa périphérie une alternance de premières parties (22) et de secondes parties (21).

4. Machine selon l'une des revendications 1 à 3, **caractérisée en ce que** la ou chaque seconde partie (21) de rotor présente la forme générale d'un « U » recevant un bobinage d'excitation (215, 216) sur chacune de ses deux branches (211, 212).

5. Machine selon l'une des revendications 1 à 4, **caractérisée en ce que** lesdites troisièmes parties (23) de rotor s'étendant à distance des pôles du rotor et sur une distance radiale sensiblement inférieure au rayon du rotor.

6. Machine selon l'une des revendications 1 à 5, **caractérisée en ce que** les premières, secondes et troisièmes parties (22, 21, 23) de rotor sont définies par une carcasse unique (20).

7. Machine selon l'une des revendications 1 à 5, **caractérisée en ce que** le rotor est formé par au moins deux éléments de carcasse séparés (20a, 20b ; 20a, 20b, 20c) s'étendant entre des paires d'aimants (225) respectives, et réunies entre elles par lesdits aimants.

8. Machine selon l'une des revendications 1 à 7, **caractérisée en ce qu'**elle consiste en un alternateur de véhicule automobile.

## Claims

1. Flux switching electrical machine, comprising a stator (1) and a rotor (2), the stator comprising at least one armature winding (14) which is housed in at least one pair of notches (13), the rotor comprising means which are able to selectively establish closed magnetic circuits which pass around sections of the armature winding or windings, these means comprising at least one excitation permanent magnet (225) which is able to establish a magnetic flux in a circumferential direction of the rotor and at least one excitation winding (215, 216) which is able to establish locally an adjustable magnetic flux in an opposite circumferential direction to that of the flux produced by the or each magnet, the or each magnet being housed in a first rotor part (22) which defines a first pole pair of the rotor, the or each winding being placed around a second rotor part (21), the ends of which define a second pole pair of the rotor, said machine being **characterized in that** the rotor comprises, between the adjacent first and second rotor parts, third rotor parts (23) which form with said first and second parts a magnetic conduction path which can be borrowed by the magnetic flux established by the or each magnet by looping round on itself inside the rotor.

2. Electrical machine according to Claim 1, **characterized in that** the or each second rotor part (21) has two excitation windings (215, 216) which are able to create magnetic fluxes which are directed one towards the interior and the other towards the exterior of the rotor (2).

3. Electrical machine according to Claim 1 or 2, **characterized in that** the rotor (2) comprises along its periphery an alternating series of first parts (22) and second parts (21).

4. Machine according to any of Claims 1 to 3, **characterized in that** the or each second rotor part (21) has the general shape of a "U" which receives an excitation winding (215, 216) on each of its two branches (211, 212).

5. Machine according to any of Claims 1 to 4, **characterized in that** said third rotor parts (23) extend at a distance from the poles of the rotor and over a radial distance which is much smaller than the radius of the rotor.

6. Machine according to any of Claims 1 to 5, **characterized in that** the first, second and third rotor parts (22, 21, 23) are defined by a single frame (20).

7. Machine according to any of Claims 1 to 5, **characterized in that** the rotor is formed by at least two separate frame elements (20a, 20b; 20a, 20b, 20c) which extend between respective pairs of magnets (225) and are joined together by said magnets.

8. Machine according to any of Claims 1 to 7, **characterized in that** it consists of a motor vehicle alternator.

## Patentansprüche

1. Elektrische Maschine mit Flussumschaltung, die einen Ständer (1) und einen Läufer (2) umfasst, wobei der Ständer wenigstens eine in wenigstens einem Nutenpaar (13) aufgenommene Ankerspule (14) enthält, während der Läufer Mittel umfasst, die in der Lage sind, wahlweise geschlossene Magnetkreise herzustellen, die um die Endstücke der Ankerspule bzw. der Ankerspulen verlaufen, wobei diese Mittel wenigstens einen Erregerpermanentmagneten (225), der in der Lage ist, einen Magnetfluss in einer Umfangsrichtung des Läufers herzustellen, und wenigstens eine Erregerspule (215, 216) umfassen, die in der Lage ist, örtlich einen regelbaren Magnetfluss in einer Umfangsrichtung entgegengesetzt zu der des durch den bzw. jeden Magneten erzeugten Flusses herzustellen, wobei der bzw. jeder Magnet in einem ersten Läuferteil (22) aufgenommen ist, der ein erstes Polpaar des Läufers definiert, wobei die bzw. jede Spule um einen zweiten Läuferteil (21) herum angebracht ist, dessen Enden ein zweites Polpaar des Läufers definieren, **dadurch gekennzeichnet, dass** der Läufer zwischen den benachbarten ersten und zweiten Läuferteilen dritte Läuferteile (23) besitzt, die zusammen mit den besagten ersten und zweiten Läuferteilen eine magnetische Leitungsbahn bilden, die der durch den bzw. jeden Magneten hergestellte Magnetfluss nehmen kann, indem er im Innern des Läufers eine Schleife bildet.

2. Maschine nach Anspruch 1, **dadurch gekennzeichnet, dass** der bzw. jeder zweite Läuferteil (21) zwei Erregerspulen (215, 216) besitzt, die in der Lage sind, Magnetflüsse zu erzeugen, von denen einer zum Innern des Läufers (2) und der andere nach außen gerichtet ist.

3. Maschine nach Anspruch 1 oder 2, **dadurch gekennzeichnet, dass** der Läufer (2) entlang seinem inneren Umfang eine Wechselfolge von ersten Teilen (22) und zweiten Teilen (21) umfasst.

4. Maschine nach einem der Ansprüche 1 bis 3, **dadurch gekennzeichnet, dass** der bzw. jeder zweite Läuferteil (21) die allgemeine Form eines "U" aufweist, das eine Erregerspule (215, 216) auf jedem seiner beiden Schenkel (211, 212) aufnimmt.

5. Maschine nach einem der Ansprüche 1 bis 4, **dadurch gekennzeichnet, dass** sich die besagten dritten Läuferteile (23) in einem Abstand von den Polen des Läufers und auf einem radialen Abstand erstrecken, der deutlich kleiner als der Radius des Läufers ist.

6. Maschine nach einem der Ansprüche 1 bis 5, **dadurch gekennzeichnet, dass** die ersten, zweiten und dritten Läuferteile (22, 21, 23) durch ein einheitliches Gehäuse (20) definiert sind.

7. Maschine nach einem der Ansprüche 1 bis 5, **dadurch gekennzeichnet, dass** der Läufer durch wenigstens zwei getrennte Gehäuseelemente (20a, 20b; 30a; 20b, 20c) definiert ist, die sich jeweils zwischen zwei Magnetpaaren (225) erstrecken und durch die besagten Magneten miteinander verbunden sind.

8. Maschine nach einem der Ansprüche 1 bis 7, **dadurch gekennzeichnet, dass** sie aus einem Wechselstromgenerator für Kraftfahrzeuge besteht.
